# EUROPEAN PATENT SPECIFICATION

(11) **EP 3 311 202 B1**
(45) Date of publication and mention of the grant of the patent: **18.01.2023**
(21) Application number: 16815193.4
(22) Date of filing: 22.06.2016
(51) Int. Cl.: G01V 3/00, G01V 3/08, G01V 3/12, G01V 3/165, G01V 3/26

(54) **CRUSTAL AND DISTURBANCE FIELD SURVEY CORRECTION**
KRUSTEN- UND STÖRFELDVERMESSUNGSKORREKTUR
CORRECTION D'ÉTUDE DE CROÛTE TERRESTRE ET DE CHAMP DE PERTURBATION

(30) Priority: 22.06.2015 US 201562182655 P
(43) Date of publication of application: 25.04.2018
(73) Proprietor: ConocoPhillips Company, Houston, TX 77079 (US)
(72) Inventor: SOOFI, Khalid, Houston, Texas 77079 (US); RAMJIT, Avinash, Houston, Texas 77079 (US); PHAM, Son V., Houston, Texas 77079 (US); MAUS, Stefan, Houston, Texas 77079 (US)
(74) Representative: Simpson, Paul Christopher
(86) International application number: PCT/US2016/038698
(87) International publication number: WO 2016/209917

(56) References cited:
- WO-A1-2014/176691
- WO-A1-2014/176691
- US-A- 4 641 100
- US-A- 5 131 155
- US-A1- 2010 225 313
- US-A1- 2014 354 284
- US-A1- 2014 354 284
- US-B1- 6 321 456
- US-B1- 6 871 410
- US-B2- 8 185 312
- KINSEY ET AL.: 'Toward high-spatial resolution gravity surveying of the mid-ocean ridges with autonomous underwater vehicles;' OCEANS, [Online] 15 September 2008, pages 1 - 10, XP031482999 Retrieved from the Internet: <URL:http://www.whoi.edulcms/files/08oceans -1_41284.pdf> [retrieved on 2016-08-17]

## Description

### FIELD OF THE INVENTION

This invention relates to magnetic field mapping and, more specifically, to crustal and disturbance field survey correction.

### BACKGROUND OF THE INVENTION

In subsurface and sub-seabed drilling operations, knowledge of the magnetic field direction and strength is important in determining drilling direction. The earth's magnetic field (geomagnetic field) direction and strength differs based on location, time, and the total magnetic field measured at any given point is additionally affected by any local formations and anomalies that include magnetic material. A global magnetic model based on a survey may be used as a reference, but this survey may not be updated for years. Thus, an aeromagnetic survey may be conducted in the specific area where drilling is to occur. The aeromagnetic survey involves using a magnetometer on or towed by an aircraft and results in an aeromagnetic survey map that may be more up-to-date than the global magnetic model.

US2010/0225313A1 describes an atomic magnetometer which may be used in a vehicle to help produce a geological survey, or downhole to help produce accurate information from a logging tool.

US2014/0354284A1 describes the use of autonomous vehicles to obtain local magnetic field information which may be used to help calculate an accurate position of a wellbore.

### SUMMARY OF THE INVENTION

According to the invention a system and method are provided as set out in the appended claims.

### BRIEF DESCRIPTION OF THE DRAWINGS

The invention, together with further advantages thereof, may best be understood by reference to the following description taken in conjunction with the accompanying figures by way of example and not by way of limitation, in which:
FIG. 1 is a cross-sectional view of a subsea drilling operation according to embodiments of the invention;
FIG. 2 details an exemplary autonomous vehicle and magnetometer to obtain magnetic measurements according to embodiments of the invention;
FIG. 3 illustrates an exemplary arrangement of magnetometers according to an embodiment of the invention; and
FIG. 4 is a process flow of a method of controlling drilling based on magnetic measurements according to embodiments of the invention.

### DETAILED DESCRIPTION OF THE INVENTION

As noted above, in drilling operations, knowledge of the earth's magnetic field strength and direction facilitates accurate drilling. As also noted, a global magnetic model may provide a reference, but the information may be outdated and may not provide detailed information for the area of interest. An aeromagnetic survey may be conducted to obtain a more accurate magnetic field survey, but the procedure involved can be costly and is impractical as a continuous procedure during the drilling process. Embodiments of the systems and methods described herein relate to controlling drilling direction based on continually updating a magnetic field survey grid obtained on-site and in real-time at the drilling location using one or more autonomous marine vehicles. Specifically, the disturbance field and the crustal field are measured to determine on-site geomagnetic properties. While the subsea drilling environment is discussed for exemplary purposes, the systems and methods discussed herein may be adapted for sub-surface drilling, as well.

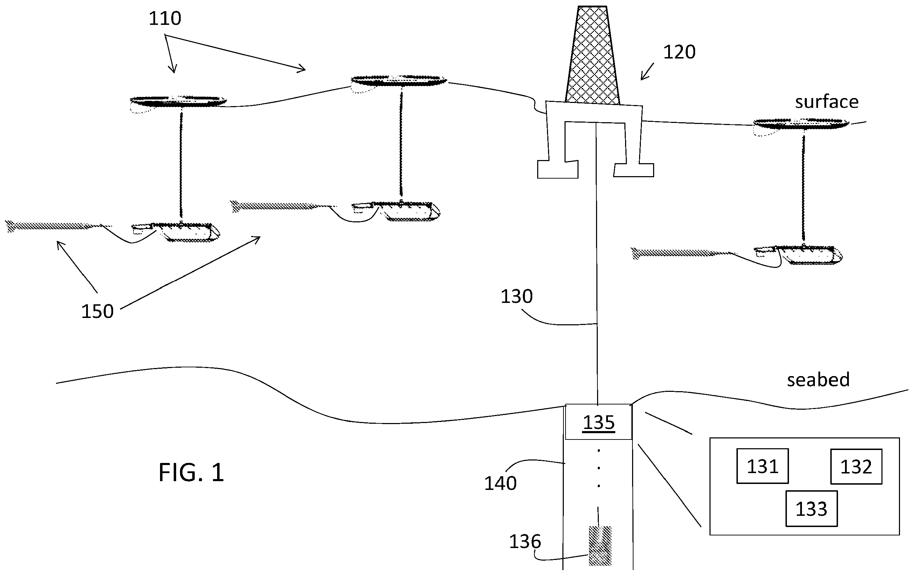

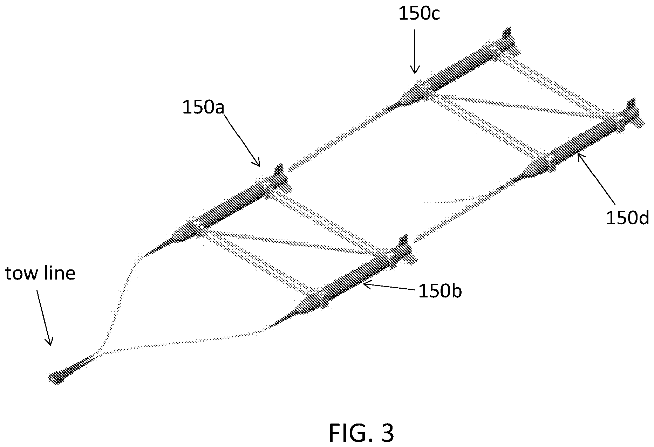

FIG. 1 is a cross-sectional view of a subsea drilling operation according to embodiments of the invention. A platform 120 is shown with a carrier 130 extending into a sub-seabed borehole 140. While the exemplary platform 120 in FIG. 1 is a semi-submersible platform, the platform 120 according to the embodiments descried herein may be fixed, submersible, vertically moored or any other type of platform. As noted above, the drilling may alternatively be sub-surface drilling rather than sub-seabed drilling such that the platform is on land. The carrier 130 is a drill string and may convey tools and sensors into the borehole 140 that are used for navigation and exploration in addition to conveying the drilling subsystem. A controller 135, which is shown in the borehole 140 but may alternately be located at the platform 120, controls the drilling operation and, in particular, the direction of drilling by the drill bit 136. The controller 135 includes one or more memory devices 131, one or more processors 132, and a communication module 133 to communicate (e.g., via telemetry over the carrier 130) with components on the platform 120 or elsewhere. One or more autonomous vehicles 110 are used to obtain the *in situ* real-time magnetic measurements as further detailed below. Each autonomous vehicle 110 is shown towing a magnetometer 150. As discussed with reference to FIG. 3 below, each autonomous vehicle 110 may tow more than one magnetometer 150. Based on the magnetic survey conducted by the magnetometer 150 towed by the autonomous vehicle 110, the controller 135 adjusts drilling direction.

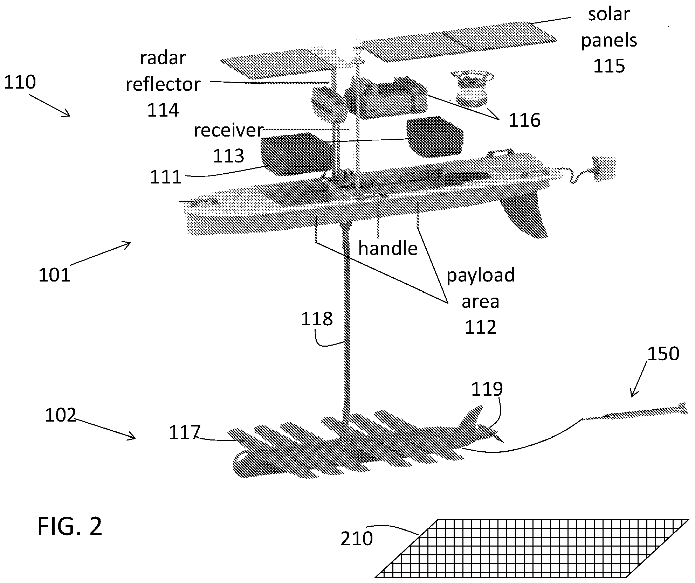

Specifically, in a base station mode, the disturbance field is measured by one or more magnetometers 150 towed by one or more autonomous vehicles 110 that encircle a relatively small radius to achieve an equivalent stationary magnetic measurement. In a survey mode, the crustal (geological) field is measured by one or more magnetometers 150 towed by one or more autonomous vehicles 110 that obtain a continuous magnetic measurement in a predetermined pattern (e.g., grid pattern 210, FIG. 2). These real-time on-site measurements are used to correct the drilling direction by the drill bit 136 based on correcting survey information that indicates magnetic north, which is used to determine the azimuth of the borehole 140.

FIG. 2 details an exemplary autonomous vehicle 110 and magnetometer 150 to obtain magnetic measurements according to embodiments of the invention. The autonomous vehicle 110 includes payload areas 112 that hold a variety of payloads 111. Among other equipment for navigation and information gathering, the autonomous vehicle 110 also includes a receiver 113 (e.g., automatic identification system (AIS) receiver), a radar reflector 114 that helps to locate the autonomous vehicle 110, solar panels 115 to generate power onboard, and other components 116. These other components 116 may include an acoustic Doppler current profiler (ADCP) that measure water velocity, other payload, and electronics for command and control tasks. The electronics may include one or more memory devices and one or more processors. The other components 116 may also include communications capability such that information gathered by the autonomous vehicle 110 is transmitted to a base station on the water surface or on land for further processing. An umbilical cord 118 carries power and communication between the surface portion 101 of the autonomous vehicle 110 and the mobile portion 102 of the autonomous vehicle 110. The mobile portion 102 of the autonomous vehicle 110 includes wings 117 and a thruster 119. The direction of motion may be communicated to the mobile portion 102 over the umbilical cord 118. The autonomous vehicle 110 tows a magnetometer 150 in the exemplary embodiment shown in FIG. 2. As the autonomous vehicles 110 moves and tows the magnetometer 150 through the water, the magnetometer 150 collects magnetic field strength and direction measurements. As noted above, different autonomous vehicles 110 may tow one or more magnetometers 150 in a circular pattern (base station mode) or predetermined pattern (survey mode). The survey mode may result in measurements obtained in the grid pattern 210, for example. A uniform number of samples of magnetic field measurements are obtained by the magnetometer 150 for each subset (square) of the grid 210. The rate at which samples are obtained and the speed of the autonomous vehicle 110 towing the magnetometer 150 determines the density of samples within each subset of the grid 210. Both the rate of sampling and the speed of the autonomous vehicle 110 may be controlled based on a preset control or in real-time.

FIG. 3 illustrates an exemplary arrangement of magnetometers 150 according to an embodiment of the invention. As shown, four magnetometers 150a, 150b, 150c, 150d are braced together to be towed (via a tow line) by the autonomous vehicle 110. In alternate embodiments, only magnetometers 150a, 150b may be present, for example or only magnetometer 150a. The arrangement of multiple magnetometers 150 may be used to increase the density of the magnetic measurement samples in the grid 210 in the survey mode or to increase the coverage area (size of the grid 210 or base station). The measurements obtained by the magnetometers 150 may be transmitted via the tow line (from the magnetometers 150 to the mobile portion 102 through the umbilical cord 118 to the surface portion 101) or in another known manner to the autonomous vehicle 110. The autonomous vehicle 110 may process the measurements or transmit the measurements to the platform 120 or elsewhere to be used to control drilling via the controller 135.

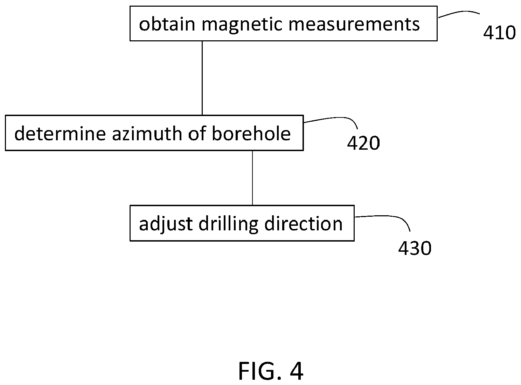

FIG. 4 is a process flow of a method of controlling drilling based on magnetic measurements according to embodiments of the invention. At block 410, obtaining magnetic measurements (crustal field) includes using one or more autonomous vehicles 110 towing one or more magnetometers 150 to obtain a uniform sampling of magnetic measurements over a grid 210 in the area of interest for drilling. Obtaining the measurements (disturbance field) additionally includes using one or more autonomous vehicles 110 towing one or more magnetometers 150 while encircling a relatively small radius. The magnetic measurements are used to determine azimuth of the borehole 140 or current drilling direction at block 420. Based on this information, the controller 135 adjusting drilling direction, at block430, includes the controller 135 changing direction of drilling by the drill bit 136 as needed. Specifically, the controller 135 may compare the predicted or estimated location of the drill bit 136 with the actual location of the drill bit 136 (based on the azimuth determined by the magnetic measurements) in order to determine how (if at all) to move the drill bit 136 to follow a predetermined path or a path that is indicated by other sensors (e.g., porosity sensor). The processes at blocks 410 through 430 may be implemented iteratively and continually, thereby providing continuous feedback control of the drill bit 136 direction.

Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system to continuously control drilling in an area based on a real-time on-site magnetic survey of the area, **characterized in that** the system comprises:
an autonomous marine vehicle (110) configured to traverse over the area;
a magnetometer (150) coupled to the autonomous vehicle (110) and configured to obtain magnetic measurements at a controlled rate, the magnetometer (150) obtaining a uniform sampling of the magnetic measurements over the area;
a processor configured to obtain the magnetic survey from the magnetic measurements;
continually updating the magnetic survey grid obtained on-site and in real-time at the drilling location using the autonomous marine vehicle;
and
a controller (135) configured to control drilling direction of a drill bit (136) based on the magnetic survey.

2. The system according to claim 1, further comprising a second autonomous vehicle (110) configured to traverse a circular path.

3. The system according to claim 2, further comprising a second magnetometer (150) coupled to the second autonomous vehicle and configured to obtain another set of magnetic measurements over the circular path.

4. The system according to claim 3, wherein the another set of magnetic measurements indicates a disturbance field.

5. The system according to claim 3, wherein the controller (135) controls the drill bit (136) based additionally on the another set of magnetic measurements.

6. The system according to claim 1, wherein the magnetic measurements indicate a crustal field.

7. The system according to claim 1, further comprising one or more other magnetometers coupled to the autonomous vehicle.

8. The system according to claim 1, wherein the magnetometer (150) is configured to continuously obtain the magnetic measurements at the controlled rate, and the controller (135) continuously controls the drill bit based on the magnetic survey resulting from the magnetic measurements.

9. A method of continuously controlling drilling in an area based on a real-time on-site magnetic survey of the area, **characterized in that** the method comprises:
coupling a magnetometer (150) to an autonomous marine vehicle (110) configured to traverse over the area;
obtaining magnetic measurements at a controlled rate using the magnetometer (150), the obtaining including obtaining a uniform sampling of the magnetic measurements for the area;
obtaining, using a processor, the magnetic survey from the magnetic measurements;
continually updating the magnetic survey grid obtained on-site and in real-time at the drilling location using the autonomous marine vehicle; and
controlling drilling direction of a drill bit (136) based on the magnetic survey.

10. The method according to claim 9, further comprising coupling a second magnetometer (150) to a second autonomous vehicle (110) and controlling the second autonomous vehicle (110) to traverse a circular path.

11. The method according to claim 10, further comprising obtaining another set of magnetic measurements over the circular path.

12. The method according to claim 11, wherein the obtaining the another set of magnetic measurements provides a disturbance field.

13. The method according to claim 9, wherein the obtaining the magnetic measurements provides a crustal field.

14. The method according to claim 9, wherein the obtaining the magnetic measurements is done continuously at the controlled rate and the controlling the drill bit (136) is done continuously based on the magnetic survey resulting from the obtaining the magnetic measurements.

15. The method according to claim 9, further comprising coupling one or more other magnetometers to the autonomous vehicle (110).

## Patentansprüche

1. System, um Bohrung in einem Bereich auf Grundlage einer magnetischen Vermessung des Bereichs in Echtzeit und vor Ort kontinuierlich zu steuern, **dadurch gekennzeichnet, dass** das System umfasst:
ein autonomes Wasserfahrzeug (110), konfiguriert, um über dem Bereich zu kreuzen;
ein Magnetometer (150), mit dem autonomen Fahrzeug (110) gekoppelt und konfiguriert, um magnetische Messungen bei einer gesteuerten Geschwindigkeit zu erhalten, wobei das Magnetometer (150) eine gleichförmige Abtastung der magnetischen Messungen über dem Bereich erhält;
einen Prozessor, konfiguriert, um die magnetische Vermessung aus den magnetischen Messungen zu erhalten;
kontinuierliches Aktualisieren des vor Ort und in Echtzeit erhaltenen magnetischen Vermessungsnetzes an dem Bohrungsstandort unter Verwendung des autonomen Wasserfahrzeugs;
und
eine Steuereinheit (135), konfiguriert, um Bohrungsrichtung einer Bohrkrone (136) auf Grundlage der magnetischen Vermessung zu steuern.

2. System nach Anspruch 1, weiter umfassend ein zweites autonomes Fahrzeug (110), konfiguriert, um einen kreisförmigen Pfad zu traversieren.

3. System nach Anspruch 2, weiter umfassend ein zweites Magnetometer (150), mit dem zweiten autonomen Fahrzeug gekoppelt und konfiguriert, um einen anderen Satz magnetischer Messungen über dem kreisförmigem Pfad zu erhalten.

4. System nach Anspruch 3, wobei der andere Satz magnetischer Messungen ein Störungsfeld anzeigt.

5. System nach Anspruch 3, wobei die Steuereinheit (135) die Bohrkrone (136) zusätzlich auf Grundlage des anderen Satzes magnetischer Messungen steuert.

6. System nach Anspruch 1, wobei die magnetischen Messungen ein Krustenfeld anzeigen.

7. System nach Anspruch 1, weiter umfassend ein oder mehrere weitere mit dem autonomen Fahrzeug gekoppelte Magnetometer.

8. System nach Anspruch 1, wobei das Magnetometer (150) konfiguriert ist, um die magnetischen Messungen bei der gesteuerten Geschwindigkeit kontinuierlich zu erhalten, und die Steuereinheit (135) die Bohrkrone auf Grundlage der aus den magnetischen Messungen resultierenden magnetischen Vermessung kontinuierlich steuert.

9. Verfahren, um Bohrung in einem Bereich auf Grundlage einer magnetischen Vermessung des Bereichs in Echtzeit und vor Ort kontinuierlich zu steuern, **dadurch gekennzeichnet, dass** das Verfahren umfasst:
Koppeln eines Magnetometers (150) mit einem autonomen Wasserfahrzeug (110), konfiguriert, um über dem Bereich zu kreuzen;
Erhalten magnetischer Messungen bei einer gesteuerten Geschwindigkeit unter Verwendung des Magnetometers (150), wobei das Erhalten Erhalten einer gleichförmigen Abtastung der magnetischen Messungen für den Bereich einschließt;
Erhalten, unter Verwendung eines Prozessors, der magnetischen Vermessung aus den magnetischen Messungen;
kontinuierliches Aktualisieren des vor Ort und in Echtzeit erhaltenen magnetischen Vermessungsnetzes an dem Bohrungsstandort unter Verwendung des autonomen Wasserfahrzeugs; und
Steuern von Bohrungsrichtung einer Bohrkrone (136) auf Grundlage der magnetischen Vermessung.

10. Verfahren nach Anspruch 9, weiter umfassend Koppeln eines zweiten Magnetometers (150) mit einem zweiten autonomen Fahrzeug (110) und Steuern des zweiten autonomen Fahrzeugs (110), um einen kreisförmigen Pfad zu traversieren.

11. Verfahren nach Anspruch 10, weiter umfassend Erhalten eines anderen Satzes magnetischer Messungen über dem kreisförmigen Pfad.

12. Verfahren nach Anspruch 11, wobei das Erhalten des anderen Satzes magnetischer Messungen ein Störungsfeld bereitstellt.

13. Verfahren nach Anspruch 9, wobei das Erhalten der magnetischen Messungen ein Krustenfeld bereitstellt.

14. Verfahren nach Anspruch 9, wobei das Erhalten der magnetischen Messungen bei der gesteuerten Geschwindigkeit kontinuierlich erfolgt und das Steuern der Bohrkrone (136) auf Grundlage der magnetischen Vermessung kontinuierlich erfolgt, die aus dem Erhalten der magnetischen Messungen resultiert.

15. Verfahren nach Anspruch 9, weiter umfassend Koppeln von einem oder mehreren weiteren Magnetometern mit dem autonomen Fahrzeug (110).

## Revendications

1. Système de commande continue de forage dans une zone sur la base d'un levé magnétique sur site en temps réel de la zone, **caractérisé en ce que** le système comprend :
un véhicule marin autonome (110) configuré pour parcourir la zone ;
un magnétomètre (150) couplé au véhicule autonome (110) et configuré pour obtenir des mesures magnétiques à une fréquence commandée, le magnétomètre (150) obtenant un échantillonnage uniforme des mesures magnétiques sur la zone ;
un processeur configuré pour obtenir le levé magnétique à partir des mesures magnétiques ;
la mise à jour continue de la grille de levé magnétique obtenue sur site et en temps réel à l'emplacement de forage en utilisant le véhicule marin autonome ;
et
un dispositif de commande (135) configuré pour commander une direction de forage d'un trépan (136) sur la base du levé magnétique.

2. Système selon la revendication 1, comprenant en outre un second véhicule autonome (110) configuré pour parcourir un trajet circulaire.

3. Système selon la revendication 2, comprenant en outre un second magnétomètre (150) couplé au second véhicule autonome et configuré pour obtenir un autre ensemble de mesures magnétiques sur le trajet circulaire.

4. Système selon la revendication 3, dans lequel l'autre ensemble de mesures magnétiques indique un champ de perturbation.

5. Système selon la revendication 3, dans lequel le dispositif de commande (135) commande le trépan (136) sur la base en outre de l'autre ensemble de mesures magnétiques.

6. Système selon la revendication 1, dans lequel les mesures magnétiques indiquent un champ crustal.

7. Système selon la revendication 1, comprenant en outre un ou plusieurs autres magnétomètres couplés au véhicule autonome.

8. Système selon la revendication 1, dans lequel le magnétomètre (150) est configuré pour obtenir continuellement les mesures magnétiques à la fréquence commandée, et le dispositif de commande (135) commande continuellement le trépan sur la base du levé magnétique découlant des mesures magnétiques.

9. Procédé de commande continue de forage dans une zone sur la base d'un levé magnétique sur site en temps réel de la zone, **caractérisé en ce que** le procédé comprend :
le couplage d'un magnétomètre (150) à un véhicule marin autonome (110) configuré pour parcourir la zone ;
l'obtention de mesures magnétiques à une fréquence commandée en utilisant le magnétomètre (150), l'obtention incluant l'obtention d'un échantillonnage uniforme des mesures magnétiques pour la zone ;
l'obtention, en utilisant un processeur, du levé magnétique à partir des mesures magnétiques ;
la mise à jour continue de la grille de levé magnétique obtenue sur site et en temps réel à l'emplacement de forage en utilisant le véhicule marin autonome ; et
la commande d'une direction de forage d'un trépan (136) sur la base du levé magnétique.

10. Procédé selon la revendication 9, comprenant en outre le couplage d'un second magnétomètre (150) à un second véhicule autonome (110) et la commande au second véhicule autonome (110) de parcourir un trajet circulaire.

11. Procédé selon la revendication 10, comprenant en outre l'obtention d'un autre ensemble de mesures magnétiques sur le trajet circulaire.

12. Procédé selon la revendication 11, dans lequel l'obtention de l'autre ensemble de mesures magnétiques fournit un champ de perturbation.

13. Procédé selon la revendication 9, dans lequel l'obtention des mesures magnétiques fournit un champ crustal.

14. Procédé selon la revendication 9, dans lequel l'obtention des mesures magnétiques est réalisée continuellement à la fréquence commandée et la commande du trépan (136) est réalisée continuellement sur la base du levé magnétique découlant de l'obtention des mesures magnétiques.

15. Procédé selon la revendication 9, comprenant en outre le couplage d'un ou plusieurs autres magnétomètres au véhicule autonome (110).
